Europäisches Patentamt

European Patent Office

Office européen des brevets

(11) Veröffentlichungsnummer: **0 302 444 B1**

(12) **EUROPÄISCHE PATENTSCHRIFT**

(45) Veröffentlichungstag der Patentschrift: **13.11.91**

(51) Int. Cl.⁵: **G01P 5/00**

(21) Anmeldenummer: **88112527.2**

(22) Anmeldetag: **02.08.88**

(54) **Laser-Doppler-Anemometer.**

(30) Priorität: **05.08.87 DE 3735978**
**30.10.87 DE 3736772**

(43) Veröffentlichungstag der Anmeldung:
**08.02.89 Patentblatt 89/06**

(45) Bekanntmachung des Hinweises auf die
Patenterteilung:
**13.11.91 Patentblatt 91/46**

(84) Benannte Vertragsstaaten:
**DE FR GB IT NL**

(56) Entgegenhaltungen:
**DE-A- 2 430 664**
**DE-A- 3 435 423**

**IEEE TRANS. AEROSPACE & ELECTRON.**
**SYST., Band AES-14, Nr. 3, May 1978, Seiten**
**441-454, New York, US; A. BOUTIER et al.:**
**"Laser velocimeter for wind tunnel measure-**
**ments"**

(73) Patentinhaber: **Bundesrepublik Deutschland,**
**vertreten durch den Bundesminister für**
**Wirtschaft, dieser vertreten durch den Präsi-**
**denten**
**der Physikalisch-Technischen Bundesan-**
**stalt Bundesallee 100**
**W-3300 Braunschweig(DE)**

(72) Erfinder: **Dopheide, Dietrich, Dr.,**
**Leimenweg 7,**
**W-3300 Braunschweig(DE)**
Erfinder: **Faber, Michael,**
**Wilhelmshavener Strasse 27**
**W-3300 Braunschweig(DE)**
Erfinder: **Taux, Günter,**
**Weinbergstrasse 9,**
**W-3300 Braunschweig(DE)**
Erfinder: **Reim, Gerhard,**
**Suhkamp 9,**
**W-3301 Rothemühle(DE)**

(74) Vertreter: **Lins, Edgar, Dipl.-Phys. et al**
**Patentanwälte Gramm + Lins Theodor-**
**Heuss-Strasse 2**
**W-3300 Braunschweig(DE)**

**Beschreibung**

Die Erfindung betrifft ein Laser-Doppler-Anemometer mit zwei Laserdioden, deren Laserstrahlen in einem bestimmten Bereich einer Partikel enthaltenden Strömung eines Fluids so konzentriert werden, daß in diesem Bereich ein virtuelles Interferenzstreifenmuster entsteht, und mit wenigstens einem Fotodetektor zur Detektion von durch das strömende Fluid gestreutem Licht, wobei die Wellenlänge der Laserdioden durch eine Temperatur- und Stromregelung eingestellt und stabilisiert wird.

Ein derartiges Laser-Doppler-Anemometer ist durch die DE-OS 34 35 423 bekannt. Die Verwendung von Laserdioden als Laserlichtquelle hat einerseits den Vorteil, daß ein kompakter und billiger Aufbau des Anemometers möglich ist, andererseits läßt sich darüberhinaus die Emissions-Wellenlänge der Laserdiode durch die Veränderung des Konstantstroms, mit dem die Laserdiode betrieben wird und/oder die Veränderung der Temperatur der Laserdiode einstellen. In bekannter Technik werden zwei Teilstrahlen derselben Laserdiode in dem zu untersuchenden Bereich des strömenden Fluids so überlagert, daß ein virtuelles Interferenzstreifenmuster entsteht. Durch die Wellenlängenstabilisierung ist das Interferenzstreifenmuster bei ausreichender Kohärenzlänge der Laserstrahlung stabil und stationär. Der Abstand der Intensitätsmaxima in dem Interferenzstreifenmuster ist abhängig von der Laserfrequenz und dem Schnittwinkel zwischen den beiden Laserstrahlen. Die das Interferenzstreifenmuster durchlaufenden Partikel des strömenden Fluids senden ein Streulicht aus, dessen Frequenz gegenüber der Frequenz des Laserstrahls um die Dopplerfrequenz verschoben ist. Die Bestimmung der Dopplerfrequenz ermöglicht die Bestimmung der Strömungsgeschwindigkeit. Die Bestimmung der Strömungsgeschwindigkeit auf diese Weise stößt auf Schwierigkeiten, wenn hochturbulente Strömungen sowie Strömungen mit Ablösungen untersucht werden und wenn die Strömungsgeschwindigkeit sehr niedrig ist.

Durch die DE-OS 24 30 664 ist ein Laser-Doppler-Anemometer bekannt, bei dem zwei Laserstrahlen mit unterschiedlichen Frequenzen überlagert werden, so daß sich das Interferenzbild mit einer definierten Geschwindigkeit bewegt. Dabei wird von dem Einsatz von He-Ne-Lasern ausgegangen, aber auch die Anwendung von Quecksilber-Dampflampen o. ä. für möglich gehalten. Durch die Bewegung des Interferenzfeldes soll es ermöglicht werden, die eigentliche Meßgröße, nämlich die Dopplerfrequenz, mit einfachen Mitteln zu messen.

Der Erfindung liegt die Aufgabe zugrunde, ein Laser-Doppler-Anemometer der eingangs erwähnten Art so auszubilden, daß es die Messung der Strömungsgeschwindigkeit zuverlässig auch bei Strömungsgeschwindigkeiten mit wechselnden Vorzeichen, beispielsweise hochturbulenten Strömungen, Strömungen mit Ablösungen und niedrigen Strömungsgeschwindigkeiten, ermöglicht.

Diese Aufgabe wird erfindungsgemäß mit einem Laser-Doppler-Anemometer der eingangs erwähnten Art dadurch gelöst, daß die beiden Laserdioden auf unterschiedliche Emissions-Wellenlängen (-Frequenzen) eingestellt sind und daß eine Regelschaltung zum Konstanthalten der Differenzfrequenz vorhanden ist, die auf die Temperatur- und/oder Stromregelung wenigstens einer der Laserdioden einwirkt.

Durch die Einstellung auf unterschiedliche Emissions-Wellenlängen entsteht in dem Schnittvolumen der Laserstrahlen ein virtuelles Interferenzstreifenmuster, das nicht mehr stillsteht, sondern mit einer der Differenz- oder Schwebungsfrequenz entsprechenden Geschwindigkeit wandert. Solche wandernden Interferenzstreifenmuster wurden bisher durch den Einsatz von akustooptischen Modulatoren und rotierenden Gittern erzeugt. Nachteilig dabei ist die Beschränkung auf eine feste Differenzfrequenz beim akustooptischen Modulator. Beim rotierenden Gitter ist die Frequenzverschiebung in vielen Anwendungsfällen zu gering. Darüberhinaus entstehen Lichtverluste durch Beugungserscheinungen. Der Erfindung liegt die Erkenntnis zugrunde, daß ein wanderndes Interferenzstreifensystem ohne die erwähnten Nachteile durch zwei in der Wellenlänge abstimmbare Laserdioden erzeugt werden kann.

Es ist ohne weiteres ersichtlich, daß ein weiter Bereich von Differenzfrequenzen mit der erfindungsgemäßen Anordnung einstellbar ist, wobei die jeweilige Differenzfrequenz mit der Regelschaltung konstantgehalten wird.

Durch die erfindungsgemäße Verwendung von Laserdioden LD1 und LD2 mit unterschiedlicher Emissions-Wellenlänge wird somit das Anwendungsgebiet von Laserdioden-Anemometern erheblich erweitert, so daß zusätzliche Untersuchungsmöglichkeiten eröffnet werden. Dabei können die Laserdioden prinzipiell im kontinuierlichen oder im Pulsbetrieb arbeiten. Bevorzugt ist jedoch die Anwendung im kontinuierlichen Betrieb.

Durch die Verwendung zweier separater Laserdioden entsteht der zusätzliche Vorteil, daß im Meßvolumen eine höhere Laserleistung zur Verfügung steht, so daß ein günstiges Signal-Rausch-Verhältnis erzielt werden kann.

In dem eigentlichen, durch das gestreute Licht gebildeten Meßsignal, das von dem Fotodetektor detektiert wird, ist die die interessierende Information über die Fluidgeschwindigkeit enthaltende Dopplerfrequenz von der Differenzfrequenz (Shiftfrequenz) überlagert. Die Auswertung dieses Meßsignals erfordert daher einigen Aufwand. Die Auswertung wird im allgemeinen auch voraussetzen, daß die Laserstrahlen der Laserdiodenfrequenz stabilisiert sind, so daß der Regelaufwand für die Stabilisierung der Laserstrahlen der Laserdioden nicht unerheblich ist.

Eine einfache Auswertung des Meßsignals ist auch bei weniger gut stabilisierten Laserstrahlfrequenzen der Laserdioden möglich, wenn ein der Differenzfrequenz entsprechendes Signal mit einem dem gestreuten Licht entsprechenden Signal gemischt wird, so daß die Dopplerfrequenz nach Filterung direkt erhältlich ist.

Die Erfindung soll im folgenden anhand von in der Zeichnung dargestellten Ausführungsbeispielen näher erläutert werden. Es zeigen:

Figur 1 - eine schematische Darstellung eines erfundungsgemäßen Laser-Doppler-Anemometers mit einer elektrischen Auswertung

Figur 2 - eine Einrichtung gemäß Figur 1 mit einer Mischeinrichtung zum Zwecke der Auswertung.

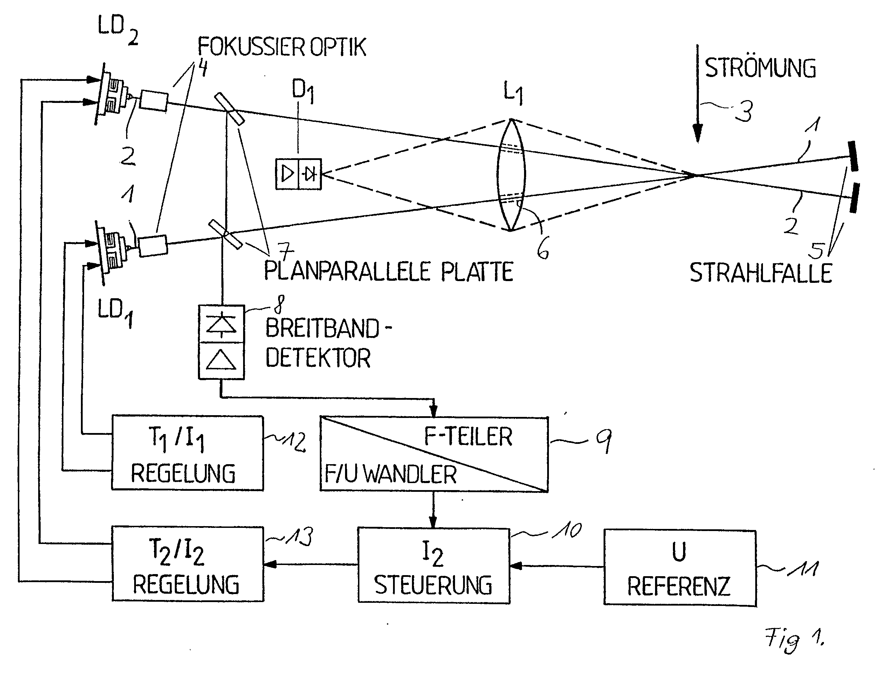

In dem in Figur 1 dargestellten Ausführungsbeispiel sind zwei Laserdioden LD1 und LD2 so ausgerichtet, daß sich ihre Strahlen 1,2 im Meßvolumen in der Strömung 3 eines Fluids überlagern und ein virtuelles Interferenzstreifenmuster bilden. Die beiden Laserstrahlen 1, 2 durchlaufen jeweils eine Fokussieroptik 4, die dafür sorgt, daß die Laserstrahlen 1,2 jeweils in dem Meßvolumen fokussiert sind. Nach Durchlaufen des Meßvolumens werden die beiden Laserstrahlen 1,2 in einer Strahlfalle 5 absorbiert, so daß sie die weitere Messung nicht stören.

In dem Figur 1 dargestellten Ausführungsbeispiel wird das von dem Meßvolumen rückwärts gestreute Licht mit einer Fokussierlinse L1 auf den Eingang eines Fotodetektors D1 fokussiert. Der Fotodetektor D1 wandelt das optische Signal in ein elektrisches Signal um, das in bekannter Weise bezüglich der Dopplerfrequenz - und damit der Strömungsgeschwindigkeit der Strömung 3 des Fluids - ausgewertet wird. Die Fokussierlinse L1 weist Durchgangsöffnungen 6 für die Laserstrahlen 1,2 auf, so daß diese durch die Fokussierlinse L1 nicht beeinflußt werden.

Zwischen der Fokussieroptik 4 und der Fokussierlinse L1 werden aus den Laserstrahlen 1, 2 Teilstrahlen mit Hilfe von planparallelen Platten 7 so ausgekoppelt, daß die ausgekoppelten Strahlen aufeinanderfallend auf den Eingang eines Breitbanddetektors 8 gelangen. Der Breitbanddetektor 8 wandelt das optische Signal an seinem Eingang in ein elektrisches Signal um. Zur Bestimmung der Differenzfrequenz der beiden Laserstrahlen 1,2 schließt sich an den Breitbanddetektor eine Signalverarbeitungseinheit 9 an, die aus einem Frequenzteiler und einem Frequenz-Spannungs-Wandler besteht. Am Ausgang der Signalverarbeitungseinheit 9 - und somit an einem Eingang eines nachgeschalteten Komparators 10 - steht somit eine der Differenzfrequenz zwischen den beiden Laserstrahlen 1, 2 proportionale Spannung an. Auf einen zweiten Eingang des Komparators 10 gelangt eine mit einer Referenzspannungsquelle 11 eingestellte Referenzspannung.

Die beiden Laserdioden LD1 und LD2 sind in an sich bekannter Weise an jeweils ein Regelungsnetzwerk 12, 13 angeschlossen, mit dem der durch die Laserdioden LD1 bzw. LD2 fließende Strom I1 bzw. I2 eingestellt und konstantgehalten und die Arbeitstemperatur T1 bzw. T2 der Laserdioden LD1 bzw. LD2 ebenfalls konstantgehalten wird.

Der Komparator (Regler) 10 ist im vorliegenden Fall so ausgebildet, daß er eine Steuerung des Konstantstroms I2 der Laserdiode LD2 ermöglicht, wenn die mit dem Breitbanddetektor 8 gemessene Differenzfrequenz zwischen den beiden Laserstrahlen 1,2 von der mit Hilfe der Referenzspannungsquelle 11 eingestellten Sollfrequenz abweicht.

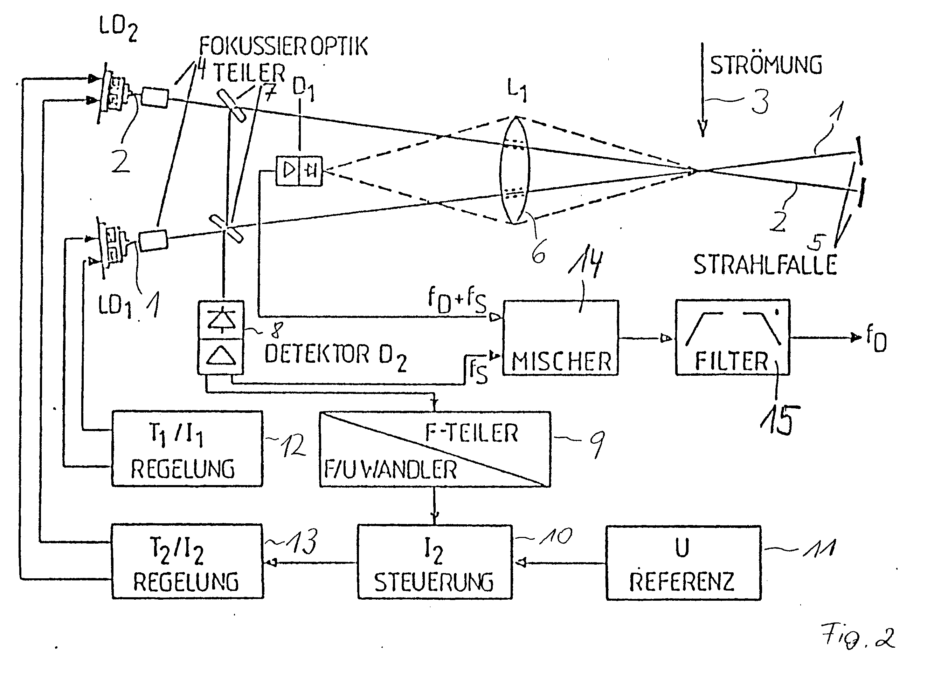

Das Ausgangssignal des Fotodetektors 1 enthält die überlagerte Dopplerfrequenz $f_D$ und die Differenzfrequenz (Shiftfrequenz) $f_S$. Bei dem in Figur 2 dargestellten Ausführungsbeispiel gelangt dieses Signal auf einen Eingang eines Mischers 14, auf dessen anderen Eingang das Ausgangssignal des Breitbanddetektors D2 8 gelangt. Am Ausgang des Mischers steht als Mischprodukt unter anderem das Signal $(f_D + f_S) - f_S = f_D$ an, so daß mit einem nachgeschalteten Filter 15 die die Meßinformation über die Strömungsgeschwindigkeit enthaltende Dopplerfrequenz $f_D$ unmittelbar erhältlich ist. Frequenzänderungen der Differenzfrequenz $f_S$ während der "transit-time" der Partikel werden durch den Mischvorgang weitestgehend eliminiert.

Durch die erfindungsgemäße Verwendung von Laserdioden LD1 und LD2 mit unterschiedlicher Emissions-Wellenlänge wird somit das Anwendungsgebiet von Laserdioden-Anemometern erheblich erweitert, so daß zusätzliche Untersuchungsmöglichkeiten eröffnet werden. Dabei können die Laserdioden prinzipiell im kontinuierlichen oder im Pulsbetrieb arbeiten. Bevorzugt ist jedoch die Anwendung im kontinuierlichen Betrieb.

**Patentansprüche**

1. Laser-Doppler-Anemometer mit zwei Laserdioden (LD1, LD2), deren Laserstrahlen (1,2) in einem bestimmten Bereich einer Partikel enthaltenden Strömung (3) eines Fluids so konzentriert werden, daß in diesem Bereich ein virtuelles Interferenzstreifenmuster entsteht, und mit wenigstens einem Fotodetektor (D1) zur Detektion von durch das strömende Fluid gestreutem Licht, wobei die Wellenlänge der Laserdioden (LD1, LD2) durch eine Temperatur- und Stromregelung (12, 13) eingestellt und stabilisiert wird, **dadurch** gekennzeichnet, daß die beiden Laserdioden (LD1, LD2) auf unterschiedliche Emissions-Wellenlängen eingestellt sind und daß eine Regelschaltung (8,9,10) zum Konstanthalten der Differenzfrequenz vorhanden ist, die auf die Temperatur-und/oder Stromregelung (13) wenigstens einer der Laserdioden (LD1, LD2) einwirkt.

2. Laser-Doppler-Anemometer nach Anspruch 1, dadurch gekennzeichnet, daß ein der Differenzfrequenz entsprechendes Meßsignal einem Eingang eines Komparators (10) zugeführt wird, auf dessen zweiten Eingang ein entsprechend der gewünschten Differenzfrequenz eingestelltes Referenzsignal gelangt.

3. Laser-Doppler-Anemometer nach Anspruch 1, dadurch gekennzeichnet, daß ein der Differenzfrequenz ($f_S$) entsprechendes Signal mit einem dem gestreuten Licht entsprechenden Signal ($f_S$ + $f_D$) gemischt wird, so daß die Dopplerfrequenz ($f_D$) nach Filterung direkt erhältlich ist.

4. Laserdioden-Anemometer nach Anspruch 3, dadurch gekennzeichnet, daß das Ausgangssignal ($f_D$ + $f_S$) der Fotodiode (D1) und das Ausgangssignal ($f_S$) der Meßeinrichtung (8) für die Differenzfrequenz auf einen Mischer (14) gelangen, an dessen Ausgang ein Filter (15) für die Dopplerfrequenz ($f_D$) angeschlossen ist.

**Claims**

1. A laser-Doppler-anemometer comprising two laser diodes (LD1, LD2), the laser beams (1, 2) of which are concentrated in a specified zone of a flow (3) of a fluid which contains particles, in such manner that a virtual interference band pattern is formed in this zone, and comprising at least one photo-detector (D1) for the detection of light scattered by the flowing fluid, where the wave length of the laser diodes (LD1, LD2) is set and stabilised by a temperature- and current regulating system (12, 13), characterised in that the two laser diodes (LD1, LD2) are set at different emission wave lengths, and that a regulating circuit (8, 9, 10) is provided which maintains constant the difference frequency and which influences the temperature- and/or current regulating system (13) of at least one of the laser diodes (LD1, LD2).

2. A laser-Doppler-anemometer as claimed in Claim 1, characterised in that a measurement signal corresponding to the difference frequency is fed to one input of a comparator (10), the second input of which is supplied with a reference signal set in accordance with the desired difference frequency.

3. A laser-Doppler-anemometer as claimed in Claim 1, characterised in that a signal corresponding to the difference frequency ($f_s$) is mixed with a signal ($f_s$ + $f_D$) corresponding to the scattered light so that the Doppler frequency ($f_D$) can be directly obtained after filtering.

4. A laser diode anemometer as claimed in Claim 3, characterised in that the output signal ($f_D$ + $f_s$) of the photo-diode (D1) and the output signal ($f_s$) of the measuring device (8) for the difference frequency are fed to a mixer (14), the output of which is connected to a filter (15) for the Doppler frequency ($f_D$).

**Revendications**

1. Anémomètre Doppler laser comportant deux diodes laser (LD1, LD2) dont les rayonnements laser (1, 2) sont concentrés dans une zone déterminée d'un écoulement (3) d'un fluide contenant des particules de telle manière qu'un motif virtuel de franges d'interférence ce forme dans cette zone, et comportant au moins un photodétecteur (D1) pour détecter la lumière diffusée par le fluide en écoulement, la longueur d'onde des diodes laser (LD1, LD2) étant réglée et stabilisée par une régulation de température et de courant (12, 13), caractérisé en ce que les deux diodes laser (LD1, LD2) sont réglées sur des longueurs d'onde d'émission différentes et en ce qu'un circuit de régulation (8, 9, 10) est prévu pour maintenir constante la fréquence différentielle et agit sur la régulation de température et/ou de courant (13) d'au moins une des diodes laser (LD1, LD2).

2. Anémomètre Doppler laser selon la revendication 1, caractérisé en ce qu'un signal de mesure correspondant à la fréquence différentielle est appliqué à une entrée d'un comparateur (10) à la seconde entrée duquel est appliqué un signal de référence réglé selon la fréquence différentielle désirée.

3. Anémomètre Doppler laser selon la revendication 1, caractérisé en ce qu'un signal correspondant à la fréquence différentielle ($f_s$) est

mélangé à un signal ($f_s$ + $f_D$), correspondant à la lumière diffusée, de sorte que la fréquence Doppler ($f_D$) peut être obtenue directement après filtrage.

4. Anémomètre Doppler laser selon la revendication 3, caractérisé en ce que le signal de sortie ($f_D$ + $f_s$) de la photodiode (D1) et le signal de sortie ($f_s$) du dispositif (8) de mesure de la fréquence différentielle sont appliqués à un mélangeur (14) à la sortie duquel est relié un filtre (15) pour la fréquence Doppler ($f_D$).

Fig 1.

EP 0 302 444 B1

LD$_2$

FOKUSSIER OPTIK

STRÖMUNG $\sim$3

TEILER

$L_1$

D$_1$

$\triangleright$ $\dashv$

2

1

2

LD$_1$ 1

5

STRAHLFALLE

6

14

f$_D$+f$_S$

8

DETEKTOR D$_2$

f$_S$

MISCHER

FILTER

f$_D$

15

T$_1$/I$_1$
REGELUNG

$\sim$12

F-TEILER

$\sim$9

F/U WANDLER

T$_2$/I$_2$
REGELUNG

$\sim$13

I$_2$
STEUERUNG

$\sim$10

U
REFERENZ

$\sim$11

Fig. 2